# EUROPEAN PATENT APPLICATION

(11) **EP 2 110 766 A1**
(43) Date of publication of application: **21.10.2009**
(21) Application number: 08103558.6
(22) Date of filing: 16.04.2008
(51) Int. Cl.: G06F 21/00

(54) **Electronic control unit, software and/or hardware component and method to reject wrong software and/or hardware components with respect to the electronic control unit**

(71) Applicant: ROBERT BOSCH GMBH, 70442 Stuttgart (DE)
(72) Inventor: Liakos, Ioannis, 70199, Stuttgart (DE); Eymann, Thomas, 70435, Stuttgart (DE); Mader, Bernhard, 71394, Kernen (DE); Biester, Juergen, 71034, Boeblingen (DE); Heinzelmann, Michael, 75447, Sternenfels (DE); Gerwing, Wolfram, 74394, Hessigheim (DE); Schneider, Klaus, 71640, Ludwigsburg (DE)

(57) **Abstract**

The invention relates to the field of electronic control unit ( ECU ) and associated software/hardware components, especially verification of software/hardware components for their authenticity and also compatibility. The software/hardware components contain a certificate issued by a trust centre. The software/hardware components also contain component specific information which identifies their source and their compatibility with the ECU. The ECU reads the certificate and the component specific information from the software/hardware components and rejects if the software/hardware components are not from an authentic source or if software/hardware components are not compatible to the ECU.

## Description

### State of the Art

The invention relates to the field of electronic control units and associated software and/or hardware components, especially verification of software and hardware components for their authenticity and also compatibility. In general the invention can be used in any embedded system for verification of software and hardware components.

Verification of the data and software components using a digital signature is known in the state of the art. The US patent application US 2003/0167407 discloses one such system and a method to verify the software components using the digital signature.

### Advantages of the invention

The device and method according to the independent patent claims have the below mentioned advantages:

The electronic control unit ( ECU ) verifies whether the software/hardware components being used are from an authentic source and also whether the software/hardware components are compatible with the electronic control unit. The electronic control unit rejects the software/hardware components if they fail the verification test.

The software/hardware components identify themselves to the ECU by providing component specific information and also provide a certificate issued by a trust centre. This will make the software/hardware components more trustworthy and also the identification is used to check for the compatibility of the software/hardware components with the ECU.

Further improvements and/or advantages are realised by the features of the dependent patent claims.

The electronic control unit uses a public key which is directly supplied by an independent trust centre which is certifying the software/hardware components. This will provide an additional security and also additional authenticity for the software/hardware components.

The certificate is issued by an independent trust centre which is certifying the software/hardware components. This will make the software/hardware components more trustworthy.

As the certificates from a software/hardware components contain the supplier name, type of component, component identification number etc. the ECU can easily check the compatibility of the said software/hardware components.

### Brief descriptions of the drawings

- Figure 1: shows the schematic of an ECU connected to a software component and a hardware component
- Figure 2: shows the schematic of certification and the verification process

### Description of the embodiments

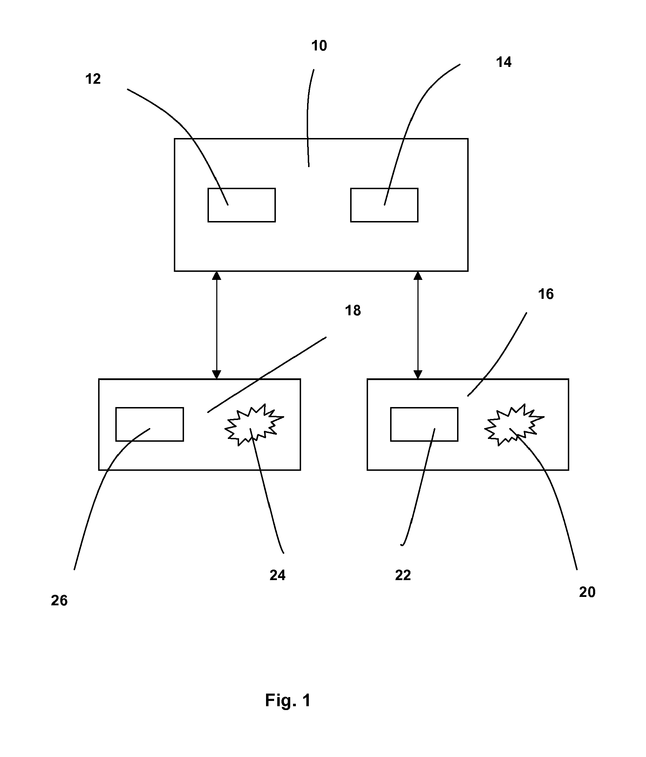

Fig. 1 shows a schematic of an ECU connected to two components.

Shown in Fig. 1 is an ECU 10 connected to a software component 16 and a hardware component 18. Here only two components are shown as examples, but the actual number of software and hardware components may vary depending upon the requirements.

The ECU 10 contains two public keys 12 and 14 corresponding to hardware component 18 and the software component 16 respectively.

The software component 16 contains a component specific information 22 and a certificate 20. Similarly the hardware component 18 contains a component specific information 26 and a certificate 24.

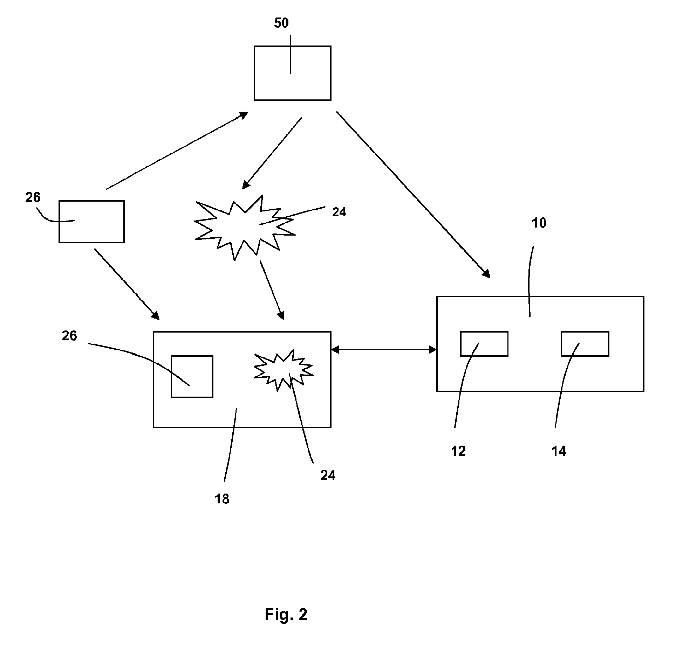

The steps involving the generation of certificate and the verification of the components are explained with Fig. 2.

Shown in Fig. 2 is a schematic of the certification and the verification process.

Shown in the Fig. 2 is a trust centre 50 receiving a component specific information 26 from a component manufacturer which is not shown in the figure and delivering a certificate 24 to the component manufacturer. The component specific information 26 and the certificate 24 are stored in the hardware component 18 by the component manufacturer. Here hardware component 18 is used only as an example. The trust centre 50 also delivers a public key 12 corresponding to the certificate 24 to the ECU manufacturers or any other user. The public key 12 is stored in the ECU 10 by the ECU manufacturer for verifying the corresponding certificate 24.

The invention deals with identity of the software and hardware components 16 and 18 and their verification process.

The identity of the hardware components in the embedded systems can be obtained by serial numbers. This is a standard followed in the area of microcontrollers, flash units and other components. Here it is important that the serial number is unique and can not be manipulated. This can be achieved by storing the serial numbers during the production of the hardware component.

Verification process allows an application to verify the identity of a component, e.g., of a hardware component. This procedure is more complex compared to the simple readout of, e.g., serial numbers and requires a trustworthy third party authority - Trust Centre.

A certificate issued by the trustworthy third party authority or the trust centre is used for verification. Here the component manufacturer gets an appropriate certificate issued for each of the hardware components and stores the certificate in the hardware components. The certificates contain component specific information of the hardware components.

The application can then verify the authenticity of the hardware components by using the public-keys from the Trust Centre.

The above process is shown in Fig. 2.

In Fig. 2, the component specific information 26 is provided by the component manufacturer to a trust centre 50. The trust centre uses a private key which is known only to the trust centre and generates a certificate 24 which is nothing but encryption of the component specific information 26 using a private key. The certificate 24 is delivered to the component manufacturer. The component manufacturer stores the certificate 24 in the hardware component 18. The component manufacturer also stores the component specific information 26 in the hardware component 18.

The trust centre 50 freely distributes the public key 12 corresponding to the certificate 24.

The hardware component 18 is connected to an ECU 10 to be used in, for example a combustion engine which is not shown in the Figure. The ECU 10 has the public key 12 directly received from the trust centre 50 and pre-stored.

When the hardware component 18 is to be verified, the ECU 10 requests the hardware component 18 for the component specific information 26 and the certificate 24. The component specific information 26 contains the supplier name, type of component, component identification number or serial number etc. The hardware component 18 provides the component specific information 26 and the certificate 24 to the ECU 10.

The ECU 10 decrypts the certificate 24 using the public key 12. The ECU compares the decrypted information from the certificate 24 with the component specific information 26. If the decrypted information from the certificate 24 and the component specific information 26 are matching, then the hardware component 18 is an authentic component. The ECU can also check using the component identification number or serial number of the hardware component 18, whether the hardware component 18 is compatible to the ECU 10. Here the ECU 10 has prior data on the hardware components which are compatible. If the hardware component 18 is not compatible to the ECU 10, then the ECU 10 generates an indication showing a mismatch with the hardware component 18 and rejects the hardware component 18.

Similarly the verification of software component is also performed by the ECU. Typical example is a multimedia system in a passenger car using different software applications. Different software applications can be freely loaded by the end-users into a multimedia system. But the problem is, how to ensure that the loaded software applications are from a secure source and function faultlessly.

Here the same procedure is used. The software application is certified in the trust centre. The system can now verify the certificate and thus verify the source of the software application and its compatibility.

The verification process can also be used for identification of outsourced components. A manufacturer can check the certificates of all the outsourced components and determine if they come from the trustworthy original sources.

The verification process can also be used for identification of spare parts. Here the process presents itself to be able to clearly identify the components of stolen vehicles.

The verification of the certificates can also be initiated by a service tester at any time to detect an incompatible hardware or software component.

## Claims

1. An electronic control unit capable of communicating with at least one software and/or hardware component, **characterised in that**
- the electronic control unit is capable of reading a component specific information from the said software and/or hardware component
- capable of reading an encrypted certificate from the said software and/or hardware component and decrypting the said certificate
- capable of comparing the component specific information with the decrypted information from the certificate
- capable of rejecting the software and/or hardware component if the component specific information does not match with the decrypted information from the certificate

2. An electronic control unit according to claim 1 wherein the read component specific information from the software component or hardware component contains the supplier name, type of component, component identification number etc.

3. An electronic control unit according to claim 1 wherein the information in the certificate from a software component or a hardware component contains the supplier name, type of component, component identification number etc.

4. An electronic control unit according to claim 1 wherein the said electronic control unit contains public keys, each public key associated to one software or hardware component, each public key directly received from associated trust centre.

5. A method to verify source of the software and/or hardware component and their compatibility, comprising the steps:
- reading an encrypted certificate from a software and/or hardware component
- decrypting the certificate using a pre-stored public key
- reading a component specific information from the software and/or hardware component
- verifying whether the component specific information matches with the contents of the decrypted certificate
- providing an indication to show whether the verification passed or failed

6. A software and/or hardware component capable of communicating with an electronic control unit, **characterised by**,
- the said software component and/or hardware component containing component specific information, said component specific information consisting of a supplier name, type of component, component identification number etc.
- the said software component and/or hardware component containing an encrypted certificate, the encrypted certificate being supplied by a trust centre, the said certificate containing a supplier name, type of component, component identification number etc.
- the said software and/or hardware component being capable of supplying the component specific information and the encrypted certificate to the electronic control unit.
